# EUROPÄISCHE PATENTSCHRIFT

(11) **EP 2 464 264 B1**
(45) Veröffentlichungstag und Bekanntmachung des Hinweises auf die Patenterteilung: **19.06.2019**
(21) Anmeldenummer: 09809061.6
(22) Anmeldetag: 23.12.2009
(51) Int. Cl.: A47J 36/04, A47J 36/02

(54) **INDUKTIONSGESCHIRR MIT ZIRKULIERENDEM LUFTFILM**
INDUCTION COOKWARE ITEM WITH CIRCULATING AIR FILM
USTENSILES POUR LA CUISSON PAR INDUCTION MUNIS D'UN FILM D'AIR CIRCULANT

(30) Priorität: 16.11.2008 DE 202008015175 U
(43) Veröffentlichungstag der Anmeldung: 20.06.2012
(73) Patentinhaber: Kuse, Kolja, 81925 München (DE)
(72) Erfinder: Kuse, Kolja, 81925 München (DE)
(86) Internationale Anmeldenummer: PCT/EP2009/009258
(87) Internationale Veröffentlichungsnummer: WO 2010/072414

(56) Entgegenhaltungen:
- WO-A1-2004/023043
- DE-A1- 2 657 699
- DE-A1- 3 602 666
- FR-A1- 2 686 035

## Beschreibung

Die vorliegende Erfindung bezieht sich auf ein induktives Kochgeschirr, bei welchem durch einen Luftfilm zwischen Kochgefäss und Kochherdplatte dafür gesorgt wird, dass das Kochfeld möglichst wenig erwärmt bzw. erhitzt wird. Das Material des Kochgeschirrs ist mindestans an der Unterseite magnetisierbar.

Der Luftfilm wird durch einen Abstand zwischen Unterseite des Kochgefässes und der Kochplatte erzeugt.

Die magnetisierbare Unterseite des Topfbodens wird durch ein Induktionsfeld, welches mit Hilfe einer Spule unterhalb der Kochfeldoberfläche, durch die ein höherfrequenter Wechselstrom fliesst, oberhalb der Kochfeldoberfläche erzeugt wird, in molekulare Schwingung der magnetischen Dipole versetzt und dadurch erhitzt.

Bei dieser Erwärmung mit Hilfe der induktiven Energieaufnahme wird das ganze Kochgefäß mit Inhalt heiss und erwärmt gleichzeitig die Unterlage, auf der das Kochgeschirr steht, was in der Regel eine Ceranplatte oder ähnliche Keramikfläche oder Steinauflage ist, die die Herauflagefläche bildet, auf der die zu erhitzenden Koch- und Bratgefässe stehen.

Um diese Fläche möglichst wenig aufzuwärmen empfiehlt der Stand der Technik zum Beispiel in der DE 297 03 237 einen aufsetzbaren Abstand zwischen Kochgefäss und Herdauflage zu bringen, der seinerseits einen Luftfilm zwischen Kochgefäss und Herdplatte zulässt. Diese Luft erwärmt sich an der Unterseite des Kochgefässes und fliesst nach aussen und oben ab, wobei die erwärmte Luft Wärme abführt, die andernfalls ohne Luftfilm die Herdplatte erwärmen würde. Diese Luftschicht kann auf der Herdoberfläche bereits einen Temperaturunterschied von mehreren 10°C, je nach Luftschichtdicke bis zu 50°C, bewirken und fuhrt zu einer Reduktion der Herdtemperatur, die dadurch in einen Bereich kommt, innerhalb dessen man sich nicht mehr ernsthaft verbrennen kann, selbst wenn man mit der Hand auf die Kochfläche fasst, auf der gerade zuvor gekocht wurde.

Bekannt sind also bewegliche Abstandhalter, die unter den Topf gestellt oder gelegt werden, oder durch Magnet an den Topfboden angebracht sind, die einen Abstand zwischen Topf und Herdplatte bringen, um Kühlung durch Luftzirkulation zu erreichen. Diese haben den Vorteil univerell einsetzbar zu sein und jeden induktiv beheizten Topf, der auf dem Markt ohne die Vorrichtung des Abstandes im freien Handel erhältlich ist, mit dem Vorteil des Abstandes zu versehen. Solche Lösungen haben sich aber bisher deshalb nicht durchgestzt, weil als zu unpraktisch erwiesen, da diese Abstandhalter geometrisch kompliziert sind, als zusätzliches Teil gespült und verstaut werden müssen, und nicht jede Geometrie optimal auf jeden Topf passt. Lose Abstandhalter durch Kleb-Verbindung am Topfboden anzubringen, siehe DE-A-3602666, ist ebenso unpraktisch, da Klebeverbindungen sich bei diesen Temperaturen über die Zeit lösen.

Die Erfindung schlägt deshalb vor, nunmehr jegliches induktive Kochgeschirr durch dessen Geometrie am Boden automatisch mit einem Abstand zur Kochplatte zu versehen, der eine freie automatische Luftkonvektion zulässt, die für jede Art des induktiven Kochens nur von Vorteil wegen Temperturreduktion an der Hochherdoberfläche bedeutet. Die Versuche im Zusammenhang mit dieser Entwicklung haben gezeigt, dass der Luftfilm in keiner Kochsituation und bei keiner Geometrie der Kochgefässe irgedwelche technischen Probleme, Handling-Probleme oder Energeiübertragungsprobleme erzeugt hätte, die es notwendig machen würden, solche Abstandhalter abnehmbar zu gestalten. Die damit gemachte Erkenntnis macht den Weg frei für induktives Kochgeschirr generell einen permanent und voll integrierte Abstand zwischen Kochgefäss und Heroberfläche vorzusehen, da er keine Nachteile mit sich bringt.

Die Lösung der Erfindung ist im unabhängigen Anspruch 1 gegeben. Demgemäß wird ein anderes Material auf solche Weise fest in den Boden eingepasst und eingelassen sein, dass es mechanisch fest und unlösbar mit Hilfe geeigneter Geometrien von Boden und Abstandhalter, zum Beispiel in Form einer Hohlkehle im Topfboden, in die ein Abstandhalter aus Teflon oder Polybenzimidazol-Kunststoff (PBI) eingeklinkt und somit fest und dauerhaft verbunden ist. Entscheidend ist, dass dieser Kunststoff Temperaturen bis mindestens 400°C aushalten können muss, da er sonst die Funktion nicht dauerhaft erfüllen kann, wenn er sich verformen und lösen kann. Ein zusätzlicher Effekt wird dann erzeilt, wenn sich durch die Form der Vertiefung an der Unterseitee des Topfes die natürliche Luft-Zirkulation in Form einer Rotation der ein und ausströmenden Luft ausbildet. Dies kann erreicht werden, wenn die Vertiefung an der Topfunterseite eine gewisse Länge und zweidimensionale Kurvenform mit Tragflächenprofil für die Strömungsbeschleunigung hat. Die Auflagefläche auf der Herdplatte sollte selbst eine möglichst kleine Fläche bilden, weshalb eine dreidimensionale Kurvenform, zum Beispiel die einer Kugeloberfläche, gewählt wird.

Eine der vielen möglichen Ausführungen der Erfindung beschreibt eine Herd-Platte aus Granit (1), die mit einer Induktionsspule (2) unterbaut ist, die ein magnetisierbares Kochgefäss (3) erhitzt. Auf diese Kochplatte kommt ein Kochgefäss (3) zum Einsatz, welches drei Abstandhalter (4) zur Herauflage hat. Die dadurch geschaffene Luftschicht zwischen Topfbodenunterseite und Herdplattenoberseite sorgt für den Abtransport der heiss werdenden Luft durch natürliche Konvektion der warmen Luft und dem automatischen Nachfliessen kalter Luft.

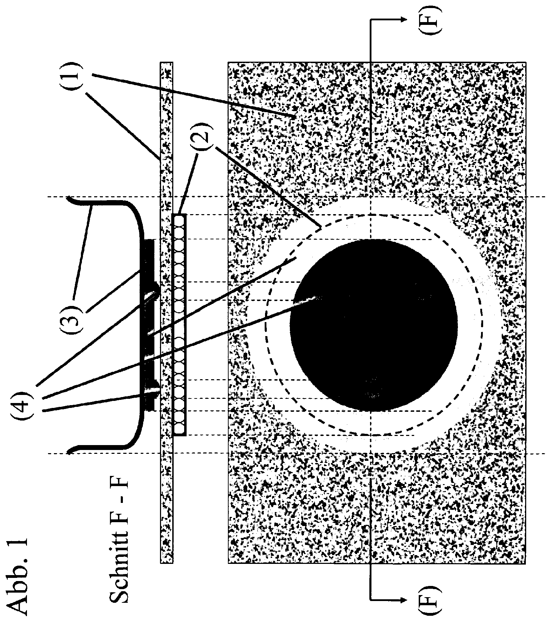

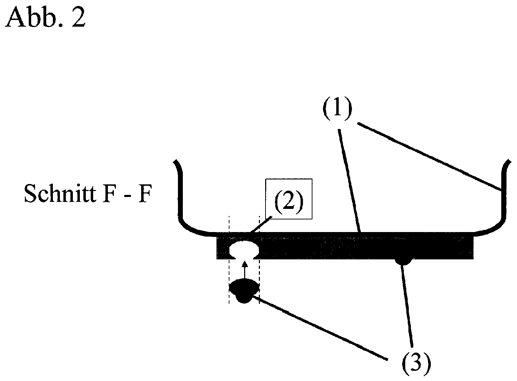

Abb. 2 zeigt den Schnitt durch die Form eines Topfbodens (1), der eine hohlkehlförmige Vertiefung (2) hat, in die ein kunststoffhaltiges Material (3) eingepresst ist, welches den Raum der Hohlkehle so füllt, dass es nicht herausfallen kann und durch die Geometrie festgehalten wird. Das Material hat eine Temperaturstabilität bis über 400°C und besteht aus thermoplastischem Polybenzimidazol-Kunststoff (PBI).

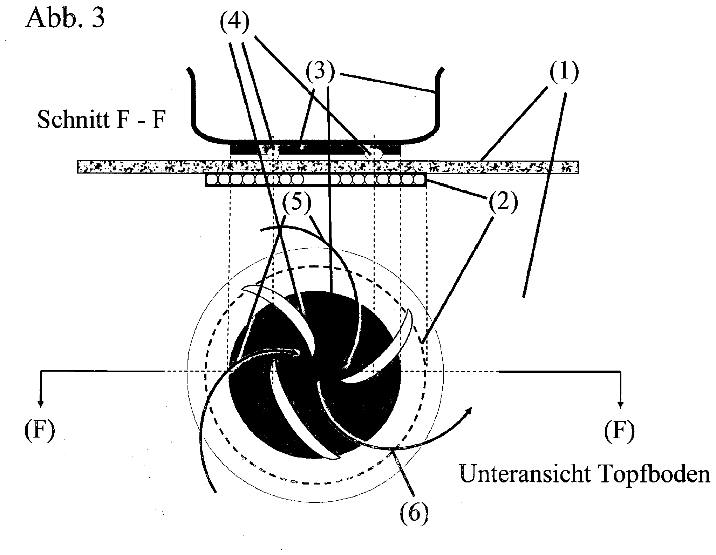

Abb. 3 zeigt eine Herd-Platte aus Granit (1), die mit einer Induktionsspule (2) unterbaut ist, die ein magnetisierbares Kochgefäss erhitzt. Auf dieser Kochplatte kommt ein Kochgefäss (3) zum Einsatz, welches drei Abstandhalter (4) zur Herauflage hat, dessen Erhebung nach unten sichelförmig ausgeführt ist. Die Luft kreist dabei unter dem Topf, kalte Luft (5) strömt an zwei Seiten der drei unsymmetrisch angeordneten Sicheln, die als Tragflächenprofil mit Tragflächen-Strömungseffekt ausgeführt sind, ein und an der dritten Seite strömt die erwärmte Luft (6) wieder aus, wodurch die Herdoberfläche verstärkt gekühlt wird.

## Patentansprüche

1. Anordnung mit einem Kochgeschirr (3), z. B.einem Kochgefäß, einer Bratpfanne, einer Griddelplatte oder einer sonstigen Geometrie, die sich zum Kochen, Braten oder Warmhalten und Zubereiten von Speisen eignet, welches aus einem magnetisierbaren Material besteht und welches einen Abstandhalter zur Herdauflage hat, wobei die Anzahl von 3 Abstandshaltern gewählt wird, **dadurch gekennzeichnet, daß** eine Vertiefung im Kochgeschirrboden so ausgeführt wird, dass ein anderes Material, welches weicher als das Material des Kochgeschirrbodens und in Grenzen plastisch verformbar ist, und auf diese Weise fest in die Vertiefung eingelassen oder eingepresst ist, so dass das andere Material mit der Kochgeschirrunterseite durch ineinandergreifende Geometrien, zum Beispiel in Form einer Hohlkehle im Topfboden, mechanisch fest verbunden ist und so den Abstand zur Herdauflage bildet,
- wobei der Abstandhalter aus einem bis 400°C temperaturstabilem PBI - Kunststoffmaterial besteht.

2. Anordnung nach Anspruch 1 **dadurch gekennzeichnet, daß** die Form des Abstandhalters eine zwei oder dreidimensionale Kurvenform aufweist.

## Claims

1. Arrangement with a cookware (3), e.g. with a cooking vessel, a frying pan, a griddle plate or other geometry, which is suitable for cooking, roasting or keeping warm and preparing food, which consists of a magnetisable material and which has a spacer to the cooktop, wherein the number of 3 spacers is selected,
**characterized in that** a recess in the cookware tray is carried out so that another material which is softer than the material of the cookware tray and plastically deformable within limits, in this way is firmly embedded or pressed into the recess, so that the other Material is mechanically firmly fixed with the cookware underside by interlocking geometry, for example in the form of a fillet in the bottom of the pot, thus forming the distance to the cooktop, wherein the spacer consists of a up to 400°C temperature-resistant PBI plastic material.

2. Arrangement according to claim 1, **characterized in that** the shape of the spacer has a two or three-dimensional waveform.

## Revendications

1. Agencement avec une gamelle de cuisson (3), par ex. avec un pot, une poêle à frire, un plat de grille ou une autre géométrie adaptée à la cuisson, au rôtissage ou au maintien au chaud et à la préparation des aliments, constituée d'un matériau magnétisable et comportant une entretoise sur la plaque de cuisson, le nombre de 3 entretoises étant choisi,
**caractérisé en ce qu'**une empreinte dans le fond de la gamelle de cuisson est réalisée de sorte qu'un autre matériau soit plus doux que le matériau du fond de la gamelle cuisson et plastiquement déformable dans certaines limites, et soit ainsi fermement ancré ou pressé dans l'empreinte, de sorte que l'autre matériau est fixé méchaniquement avec de la gamelle de cuisson par géométrie imbriquée, par exemple sous la forme d'un congé au fond du pot, formant ainsi la distance par rapport au plaque cuisson, et que l'entretoise est constitué d'un matériau plastique PBI résistant à la température jusqu'à 400 ° C.

2. Agencement selon la revendication 1, **caractérisé en ce que** la forme de l'entretoise présente une forme d'onde bidimensionnelle ou tridimensionnelle.
